# EUROPÄISCHE PATENTANMELDUNG

(11) **EP 3 763 964 A1**
(43) Veröffentlichungstag der Anmeldung: **13.01.2021**
(21) Anmeldenummer: 20180237.8
(22) Anmeldetag: 20.08.2018
(51) Int. Cl.: F16D 65/54, B62L 1/10, F16D 65/56

(54) **KOLBEN FÜR EINE HYDRAULISCHE FAHRRADBREMSE**

(30) Priorität: 25.08.2017 DE 102017214882
(62) Teilanmeldung aus: 18189808.1
(71) Anmelder: Gustav Magenwirth GmbH & Co. KG, 72574 Bad Urach (DE)
(72) Erfinder: Ruopp, Michael, 89180 Berghülen (DE)
(74) Vertreter: Friese Goeden Patentanwälte PartGmbB

(57) **Zusammenfassung**

Die Erfindung betrifft einen Kolben (190) für eine hydraulische Fahrradscheibenbremse zur Anordnung in einem Bremszylinder einer Bremszange, mit einer Reibeinrichtung (185), die in axialer Richtung bezüglich des Bremszylinders relativ zum Bremszylinder verschiebbar angeordnet ist und ein Reibelement (186) zur Erzeugung einer Haftreibung zwischen dem Bremszylinder und der Reibeinrichtung (185) aufweist, und mit einer Rückstellfedereinrichtung (140) angegeben, die derart angeordnet und ausgebildet ist, dass die Rückstellfedereinrichtung (140) den Kolben (190) nach der Betätigung der Bremse in die Ruhelage zurückstellt, wobei die Rückstellfedereinrichtung (140) ein Federelement umfasst, das als Reibelement (186) der Reibeinrichtung (185) ausgebildet ist.

## Beschreibung

Die Erfindung betrifft eine Felgenbremsennehmervorrichtung für eine hydraulische Fahrradbremse gemäß dem Oberbegriff von Anspruch 1 und eine hydraulische Fahrradfelgenbremse.

Bei hydraulischen Fahrradfelgenbremsen ist zwischen den Felgen und den Bremsbelägen der Felgenbremsennehmervorrichtungen ein Abstand, der beim Bremsen zunächst überwunden werden muss und der sich beim Lösen der Bremse wieder einstellt. Dieser Abstand stellt sich nach dem Lösen der Bremse durch eine Rückstellfedereinrichtung ein, die den Kolben in eine vordefinierte Ruhelage zwingt. Unter "Ruhelage" ist im Sinne der vorliegenden Anmeldung die Lage des Kolbens zu verstehen, wenn die Bremse nicht betätigt wird, bzw. die Lage des Kolbens, in die der Kolben durch die Rückstellfedereinrichtung nach Lösen der Bremse zurückgestellt wird, so dass das freie Ende des Kolbens im nicht betätigten Zustand der Bremse einen vordefinierten Abstand von der Felge hat. Beim Bremsen verschleißen die Beläge. Daher ist es erforderlich, bei fortschreitendem Verschleiß der Bremsbeläge die Ruhelage nachzustellen. Die Nachstellung der Ruhelage kann beispielsweise an der Gebervorrichtung vorgenommen werden. Die Gebervorrichtungen hydraulischer Felgenbremsen weisen in der Regel eine manuelle Verstelleinrichtung zum Ausgleich des Belagverschleisses auf. Über diese Verstelleinrichtung kann Hydraulikfluid von der Gebervorrichtung in das System gedrückt werden, so dass sich der gewünschte Abstand zwischen Belag und Felge in der Ruhelage wieder einstellt.

Aus der DE 199 29 678 B4 ist es bekannt, die Nachstellung an der Nehmervorrichtung vorzunehmen. Dazu wird vorgeschlagen, entsprechend dem Verschließ der Beläge den Kolben zusammen mit dem Druckraum in Richtung der Felge zu verschieben, indem ein Verschlusskolben in den Bremszylinder geschraubt wird. Alternativ wird vorgeschlagen, einen zweiteiligen Kolben vorzusehen, wobei dessen Länge durch Verdrehen der beiden Kolbenteile an den Verschleiß der Bremsbeläge angepasst werden kann. Bei den im Stand der Technik offenbarten Alternativen wird das Volumen des Druckraums durch die Verstellung nicht verändert.

Die bekannten hydraulischen Fahrradfelgenbremsen haben den Nachteil, dass der Fahrer die Bremsen häufig und rechtzeitig warten muss, um die Nachstellung zu bewirken.

Der Erfindung liegt daher die Aufgabe zugrunde, eine Felgenbremsennehmervorrichtung für eine hydraulische Fahrradfelgenbremse anzugeben, bei dem die Verstellung entsprechend dem Verschließ der Beläge einfach und zuverlässig erfolgt, und kein Eingriff des Fahrers erforderlich ist.

Die Aufgabe wird erfindungsgemäß durch eine Felgenbremsennehmervorrichtung für eine hydraulische Fahrradfelgenbremse gemäß den Merkmalen von Anspruch 1 gelöst. Vorteilhafte Weiterbildungen der Erfindung finden sich in den Unteransprüchen.

Gemäß der Erfindung wird eine Felgenbremsennehmervorrichtung für eine hydraulische Fahrradfelgenbremse mit einem Bremszylinder angegeben, in dem ein Kolben in axialer Richtung des Zylinders verschiebbar angeordnet ist, einem Druckraum, in dem zur Betätigung der Bremse Hydraulikfluid unter Druck gesetzt wird und der Kolben unter Vergrößerung des Volumens des Druckraums in axialer Richtung des Zylinders verschoben wird, und einer Verstellvorrichtung zur Verstellung der Ruhelage des Kolbens in axialer Richtung bezüglich des Bremszylinders, wobei die Verstelleinrichtung das Volumen des Druckraums bei Verstellung der Ruhelage des Kolbens in axialer Richtung bezüglich des Bremszylinders verändert.

Die Ausführung der Erfindung hat den Vorteil, dass die Verstellung automatisch erfolgen kann und kein Eingriff des Fahrers erforderlich ist. Vorteilhafterweise weist die Fahrradfelgenbremse einen Ausgleichsbehälter auf, so dass bei der automatischen Nachstellung Hydraulikfluid automatisch in das offene System nachfließen kann.

Erfindungsgemäß kann die Verstellvorrichtung eine Reibeinrichtung aufweisen, die in axialer Richtung bezüglich des Bremszylinders relativ zum Bremszylinder verschiebbar angeordnet ist und zwischen dem Bremszylinder und dem Reibeinrichtung eine Haftreibung erzeugt.

Erfindungsgemäß kann die von der Reibeinrichtung erzeugte Haftreibung größer als die beim Betätigen der Bremse auftretende Reibung sein, die der Kolben bei Verstellung der Ruhelage des Kolbens in axialer Richtung bezüglich des Bremszylinders überwinden muss.

Erfindungsgemäß kann die Reibeinrichtung ein an der Innenwandung des Bremszylinders ausgebildetes Innengewinde und eine zugeordnete Gewindebuchse mit einem entsprechenden Aussengewinde aufweisen.

Erfindungsgemäß kann das Innengewinde in einer Buchse ausgebildet sein, die in dem Bremszylinder angeordnet ist.

Erfindungsgemäß kann die Buchse den Kolben umschließen.

Erfindungsgemäß kann die Buchse in axialer Richtung bezüglich des Bremszylinders gegenüber dem Kolben bei einer durch den Gewindeeingriff mit dem Innnengewinde erzwungenen Drehbewegung verschiebbar angeordnet sein.

Erfindungsgemäß kann die Reibeinrichtung eine Aufnahmeeinrichtung aufweisen, die auf dem Kolben in axialer Richtung bezüglich des Bremszylinders verschiebbar angeordnet ist.

Erfindungsgemäß kann die Reibeinrichtung ein Reibelement aufweisen, das in der Aufnahmeeinrichtung angeordnet ist und gegen die Innenwandung des Bremszylinders verpresst angeordnet ist.

Erfindungsgemäß kann die Aufnahmeeinrichtung den Kolben mit einem Spiel umschließen.

Erfindungsgemäß kann der Druckraum mit einer Dichtungseinrichtung gegenüber der Umgebung abgedichtet sein, die als statische Dichtung ausgebildet ist.

Erfindungsgemäß kann der Druckraum mit einer Dichtungseinrichtung gegenüber der Umgebung abgedichtet sein, die in einer Nut angeordnet ist, die in der Innenwandung des Bremszylinders ausgebildet ist.

Erfindungsgemäß kann der Bremszylinder eine Buchse aufweisen, die eine Nut zur Aufnahme einer Dichtungseinrichtung zur Abdichtung des Druckraums gegenüber der Umgebung definiert.

Erfindungsgemäß kann dabei die Buchse ein Aussengewinde aufweisen, das in ein Innengewinde eingreift, das am Bremszylinder ausgebildet ist. Alternativ oder zusätzlich kann die Buchse mit einer Presspassung in dem Bremszylinder angeordnet sein. Alternativ oder zusätzlich kann die Buchse über einen Formschluss in dem Bremszylinder gegen Verdrehung im Bremszylinder gesichert sein. Der Formschluss kann dabei durch einen oder mehrere Stege erricht werden, der bzw. die in eine oder mehrere entsprechende Aussparungen eingreifen. Dabei können der Steg bzw. die Stege an der Buchse ausgebildet sein. Alternativ oder zusätzlich kann der Steg bzw. können die Stege an dem Bremszylinder ausgebildet sein.

Erfindungsgemäß kann bei der Felgenbremsennehmervorrichtung eine Rückstellfedereinrichtung derart angeordnet und ausgebildet sein, dass die Rückstellfedereinrichtung den Kolben nach der Betätigung der Bremse in die Ruhelage zurückstellt.

Erfindungsgemäß kann die Rückstellfedereinrichtung ein Federelement umfassen, das als Reibelement der Reibeinrichtung ausgebildet ist.

Diese Ausführungen der Erfindung haben den Vorteil, dass eine kostengünstigere, kleinere und kompaktere Ausbildung wegen der Doppelfunktion eines Elements als Reibelement und Rückstellelement möglich ist.

Offene hydraulische Systeme mit Selbstnachstellung, d.h. z.B. hydraulische Systeme mit einem Ausgleichsbehälter, dessen Verbindung zum Druckraum bei der Betätigung der Bremse unterbrochen wird, sind bei hydraulischen Fahrradfelgenbremsen bislang nicht bekannt. Das ist unter anderem darin begründet, dass bei Felgenbremsen viel größere Unwuchten der Felge als bei Scheibenbremsen ausgeglichen werden müssen, weil Bremsscheiben viel ebener als die im Durchmesser viel größeren Felgen hergestellt werden können. Eine Felgenbremse benötigt daher bei der Betätigung einen viel größeren Hub als eine Scheibenbremse, um den Bremsbelag an die Reibfläche (Felge bzw. Scheibe) zu pressen. Daher waren Fahrradfelgenbremsen mit einer automatischen Nachstellung bislang nicht bekannt.Erfindungsgemäß wird auch daher eine hydraulische Fahrradfelgenbremse angegeben, die einen Ausgleichsbehälter für Hydraulikfluid und/oder eine Verstellvorrichtung zur Verstellung der Ruhelage des Kolbens in axialer Richtung bezüglich des Bremszylinders aufweist, die den Verschleiss der Bremsbeläge automatisch ausgleicht.

Vorteilhafterweise weist die hydraulische Fahrradfelgenbremse dabei eine erfindungsgemäße Felgenbremsennehmervorrichtung auf, die vorzugsweise ein oder mehrere der oben beschriebenen Merkmale aufweist bzw. gemäß einer der oben beschriebenen Ausführungen der Erfindung ausgebildet ist.

Einige der oben beschriebenen Merkmale sind nicht nur für hydraulische Fahrradfelgenbremsen neu und erfinderisch, sondern auch für hydraulische Fahrradscheibenbremsen. Daher wird erfindungsgemäß auch ein Kolben für eine hydraulische Fahrradscheibenbremse zur Anordnung in einem Bremszylinder einer Bremszange, mit einer Reibeinrichtung, die in axialer Richtung bezüglich des Bremszylinders relativ zum Bremszylinder verschiebbar angeordnet ist und ein Reibelement zur Erzeugung einer Haftreibung zwischen dem Bremszylinder und der Reibeinrichtung aufweist, und mit einer Rückstellfedereinrichtung angegeben, die derart angeordnet und ausgebildet ist, dass die Rückstellfedereinrichtung den Kolben nach der Betätigung der Bremse in die Ruhelage zurückstellt, wobei die Rückstellfedereinrichtung ein Federelement umfasst, das als Reibelement der Reibeinrichtung ausgebildet ist.

Erfindungsgemäß kann das Federelement in einer Aufnahmeeinrichtung aufgenommen sein, wobei das Federelement in axialer Richtung des Kolbens über die Aufnahmeeinrichtung vorsteht.

Erfindungsgemäß kann die Aufnahmeeinrichtung eine Stufe aufweisen, auf der das Federelement aufgenommen ist.

Erfindungsgemäß kann die Aufnahmeeinrichtung als eine Buchse ausgebildet sein, die den Kolben umschließt und die auf dem Kolben in axialer Richtung des Kolbens verschiebbar angeordnet ist.

Erfindungsgemäß kann die Rückstellfedereinrichtung eine Dichtungseinrichtung sein.

Erfindungsgemäß kann die Rückstellfedereinrichtung ein Dichtungsring, beispielsweise ein O-Ring bzw. eine Reihe von O-Ringen sein.

Erfindungsgemäß kann der Kolben für eine hydraulische Fahrradscheibenbremse auch ein Merkmal oder mehrere Merkmale der oben im Zusammenhang mit der hydraulischen Felgenbremse genannten Merkmale aufweisen.

Erfindungsgemäß wird auch eine hydraulische Fahrradscheibenbremse angegeben, wobei die hydraulische Fahrradscheibenbremse einen Ausgleichsbehälter für Hydraulikfluid und einen oder mehrere der oben genannten Kolben gemäß der Erfindung aufweist.

Die Erfindung wird im Folgenden anhand der in den Figuren gezeigten Ausführungsbeispiele beschrieben. Dabei werden folgende Bezugszeichen verwendet:
- 1: Nehmervorrichtung
- 2: Bremsbelag
- 3: Bremsbelagträger
- 4: Bremsmomentabstützeinrichtung
- 5: Druckraum
- 10: Bremszylinder
- 11: Zylinderabschnitt
- 12: Zylinderabschnitt
- 13: Innengewinde
- 14: Aussparung
- 15: Steg
- 20: Kolbenteil
- 21: Kolbenboden
- 22: Kolbenteilaufnahmeabschnitt
- 23: Rückstellfederaufnahmeabschnitt
- 24: Innenwand
- 30: Dichtungseinrichtung
- 40: Rückstellfedereinrichtung
- 50: Buchse
- 60: Stützscheibe
- 70: Buchse
- 71: Innengewinde
- 72: Aussengewinde
- 73: Abstreifer
- 74: Steg
- 75: Aussparung
- 80: Gewindebuchse
- 81: Aussengewinde
- 82: Aussparung
- 85: Reibeinrichtung
- 86: Reibelement
- 87: Aufnahmeeinrichtung
- 88: Schmutzabstreifer
- 90: Kolbenteil
- 91: Fortsatz
- 92: Kopfabschnitt
- 93: Belagaufnahme
- 94: Steg
- 100: Verstelleinrichtung
- 130: Dichtungseinrichtung
- 140: Rückstellfedereinrichtung
- 150: Buchse
- 185: Reibeinrichtung
- 186: Reibelement
- 187: Aufnahmeeinrichtung
- 190: Kolben
- 193: Belagaufnahme

### Kurzbeschreibung der Figuren:

- Fig. 1: zeigt eine Schnittansicht durch eine Felgenbremsennehmervorrichtung gemäß einer Ausführung der Erfindung.
- Fig. 2: zeigt eine Detailansicht einiger Komponenten der Felgenbremsennehmervorrichtung von Fig. 1.
- Fig. 3: zeigt eine Seitenansicht des Kolbens der Felgenbremsennehmervorrichtung von Fig. 1.
- Fig. 4: zeigt eine Seitenansicht der Gewindebuchse der Felgenbremsennehmervorrichtung von Fig. 1.
- Fig. 5: zeigt eine Aufsicht der Gewindebuchse von Fig. 4.
- Fig. 6: zeigt eine Explosionsansicht der Komponenten von Fig. 2 von der Seite.
- Fig. 7: zeigt eine perspektivische Explosionsansicht der Komponenten von Fig. 2.
- Fig. 8: zeigt eine der Fig. 1 entsprechende Schnittansicht einer weiteren Ausführung der Erfindung.
- Fig. 9: zeigt eine Schnittansicht durch eine Felgenbremsennehmervorrichtung gemäß einer weiteren Ausführung der Erfindung.
- Fig. 10: zeigt eine Detailansicht einiger Komponenten der Felgenbremsennehmervorrichtung von Fig. 9.
- Fig. 11: zeigt eine Seitenansicht des Kolbens der Felgenbremsennehmervorrichtung von Fig. 9.
- Fig. 12: zeigt eine Seitenansicht der Aufnahmeeinrichtung der Felgenbremsennehmervorrichtung von Fig. 9.
- Fig. 13: zeigt eine Aufsicht der Aufnahmeeinrichtung von Fig. 12 .
- Fig. 14: zeigt eine Explosionsansicht der Komponenten von Fig. 10 von der Seite.
- Fig. 15: zeigt eine perspektivische Explosionsansicht der Komponenten von Fig. 10.
- Fig. 16: zeigt eine der Figuren 1, 8 bzw. 9 entsprechende Schnittansicht einer weiteren Ausführung der Erfindung.
- Fig. 17: zeigt eine Seitenschnittansicht eines Kolbens für eine Fahrradscheibenbremse gemäß einer Ausführung der Erfindung.
- Fig. 18: zeigt eine perspektivische Explosionsansicht der Komponenten von Fig. 17.

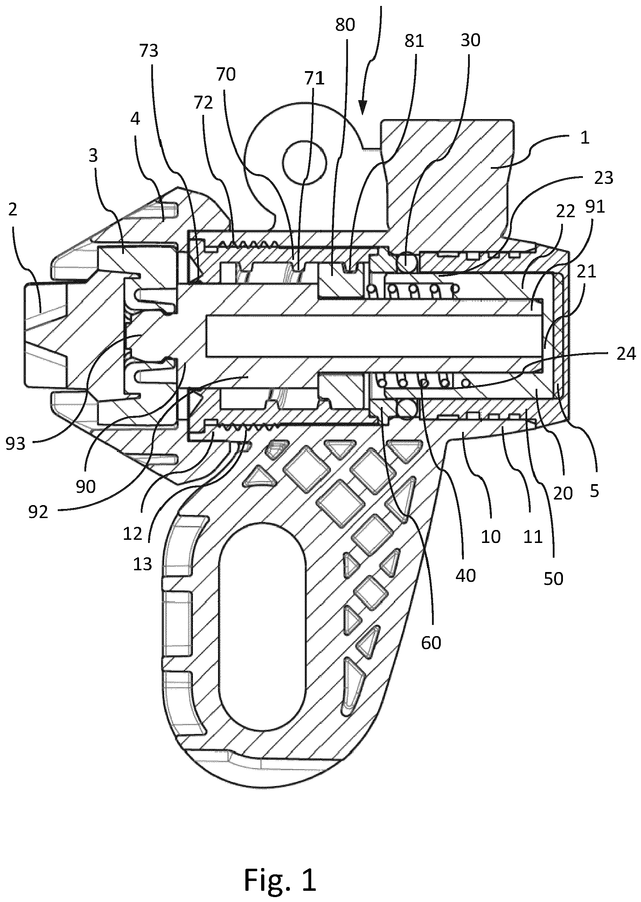

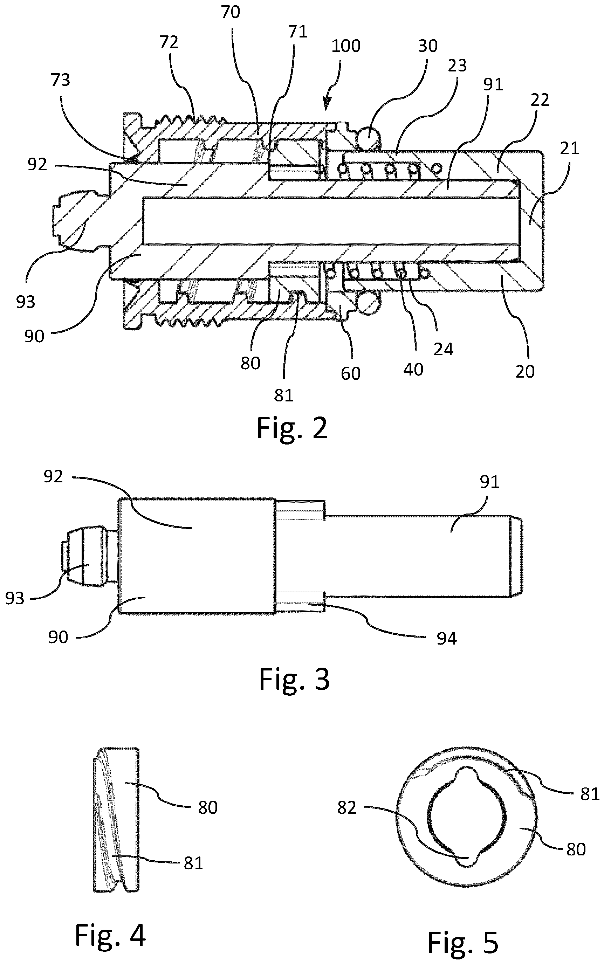

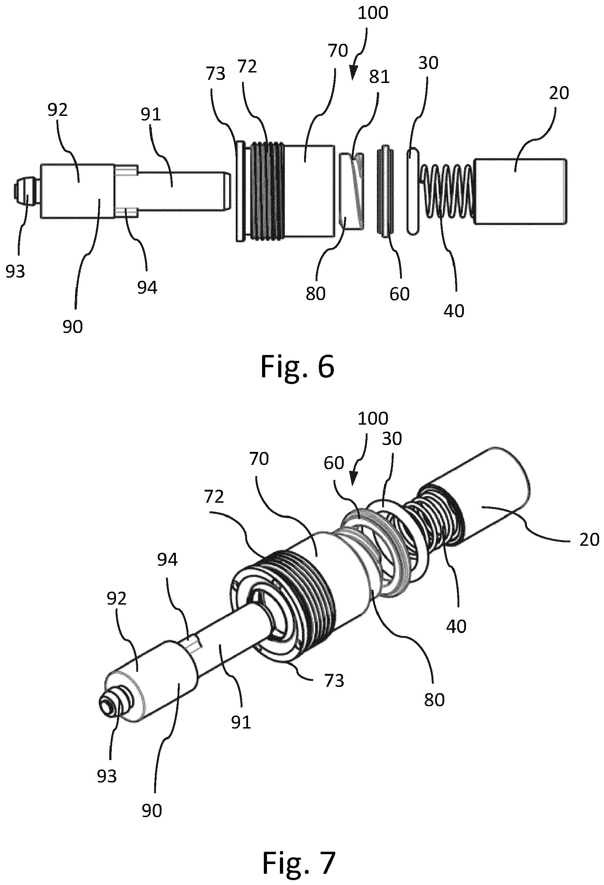

Die Figuren 1 bis 7 zeigen eine Nehmervorrichtung 1 für eine hydraulische Fahrradfelgenbremse gemäß einer Ausführung der Erfindung.

Ein Bremsbelag 2 ist auf einem Bremsbelagträger 3 befestigt, der in einer Bremsmomentabstützeinrichtung 4 angeordnet ist.

Die Nehmervorrichtung 1 weist einen Bremszylinder 10 auf, in dem ein Druckraum 5 vorgesehen ist.

Zum Bremsen wird über eine nicht dargestellte Gebervorrichtung Druck in dem Druckraum 5 aufgebaut und der Bremsbelag 2 wird dadurch in Fig. 1 nach links gegen eine nicht dargestellte Felge gedrückt. Die entstehende Reibkraft zwischen dem Bremsbelag 2 und der Felge wird durch eine Bremsmomentabstützeinrichtung 4 aufgenommen und bremst die Relativbewegung zur Felge ab.

Der Bremszylinder 10 weist einen ersten Zylinderabschnitt 11 mit einem ersten Durchmesser auf, in dem eine erste Buchse 50 aufgenommen ist. Der Bremszylinder 10 weist einen zweiten Zylinderabschnitt 12 mit einem zweiten Durchmesser auf, in dem eine zweite Buchse 70 aufgenommen ist. Der Durchmesser des zweiten Zylinderabschnitts 12 ist etwas größer als der Durchmesser des ersten Zylinderabschnitts 11. Entsprechend ist der Durchmesser der ersten Buchse 50 etwas kleiner als der Durchmesser der zweiten Buchse 70.

Der Kolben weist ein erstes Kolbenteil 20 und ein zweites Kolbenteil 90 auf. Das erste Kolbenteil 20 weist einen Kolbenboden 21 und einen Kolbenteilaufnahmeabschnitt 22 auf, in dem das zweite Kolbenteil 90 vorzugsweise mittels einer Presspassung angeordnet ist. Das erste Kolbenteil 20 umfasst einen Rückstellfederaufnahmeabschnitt 23 mit einer Innenwand 24, in dem eine Rückstellfedereinrichtung 40 angeordnet ist.

Zwischen der ersten Buchse 50 und der zweiten Buchse 70 ist eine Dichtungseinrichtung 30 und eine Stützscheibe 60 angeordnet. Die Dichtungseinrichtung 30 dichtet den Druckraum 5 gegen das Kolbenteil 20 ab, so dass bei Druckaufbau in dem Druckraum 5 der Kolben in Richtung seines freien Endes bzw. der Felge verschoben wird, an dem der Bremsbelag mit dem Bremsbelagträger angeordnet ist.

Die Buchse 70 weist ein Aussengewinde 72 auf, mit dem die Buchse in den Zylinderabschnitt 12 gedreht ist, der ein entsprechendes Innengewinde 13 aufweist.

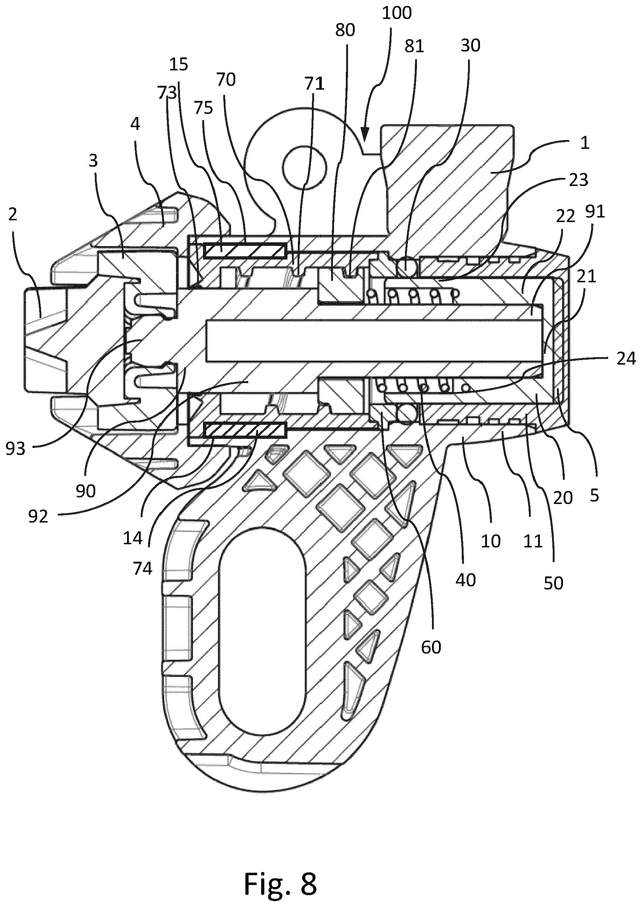

Alternativ oder zusätzlich kann die Buchse 70 auch mit einer Presspassung in dem Bremszylinder 10 angeordnet werden. Alternativ oder zusätzlich kann die Buchse 70 auch in dem Bremszylinder 10 mit einem Formschluss gegen Drehung gesichert sein, wie beispielsweise in Fig. 8 gezeigt ist.

An der Buchse 70 ist optional ein Abstreifer 73 vorgesehen, um Schmutz und/oder Hydraulikfluid abzustreifen.

Das zweite Kolbenteil 90 weist einen Fortsatz 91 auf, mit dem das zweite Kolbenteil 90 in dem Kolbenteilaufnahmeabschnitt 22 des ersten Kolbenteils 20 aufgenommen ist. Das zweite Kolbenteil 90 umfasst einen Kopfabschnitt 92, an dem eine Belagaufnahme 93 zur Aufnahme des Bremsbelagträgers 3 und des daran angebrachten Bremsbelags 2 vorgesehen ist.

An der zweiten Buchse 70 ist auf der Innenseite ein Innengewinde 71 mit einem Steilgewinde vorgesehen, in dem eine Gewindebuchse 80 aufgenommen ist, die ein ensprechendes Aussengewinde 81 aufweist. Auf seiner Innenseite weist die Gewindebuchse 80 eine Aussparung 82 oder mehrere Aussparungen 82 bzw. wie dargestellt zwei Aussparungen 82 auf, in die eine entsprechende Anzahl von Stegen 94 des zweiten Kolbenteils 90 eingreifen, so dass sich das zweite Kolbenteil 90 nur mit der Gewindebuchse 80 zusammen um die Achse drehen kann. Das zweite Kolbenteil 90 kann auch weniger Stege 94 aufweisen, als Aussparungen 82 vorgesehen sind.

Die Gewindebuchse 80 bildet mit dem Innengewinde 71 der zweiten Buchse 70 und den Stegen 94 des zweiten Kolbenteils eine Verstelleinrichtung 100, die eine automtische Belagnachstellung bewirkt, wie im folgenden erläutert.

Bei der Betätigung der Bremse wird Druck im Druckraum 5 aufgebaut. Dadurch verschiebt sich der Kolben in Fig. 1 derart nach links, dass sich das Kolbenteil 20 gemeinsam mit dem Kolbenteil 90 und dem daran angeordneten Bremsbelagträger 3 und Bremsbelag 2 in Fig. 1 nach links bewegen, bis der Abstand zwischen der Gewindebuchse 80 und dem ersten Kolbenteil 20 überwunden ist und das erste Kolbenteil 20 an die Gewindebuchse 80 anstösst. Zu diesem Zeitpunkt sollten die Bremsbeläge 2 auch an die Felge stossen und die Bremswirkung ausüben.

In Folge der Bewegung wird die Rückstellfedereinrichtung 40 zusammengedrückt. Da die Haftreibung zwischen der Gewindebuchse 80 und der Buchse 70 größer als die Haftreibung zwischen dem Kolbenteil 20 und der Dichtungseinrichtung 30 bzw. der ersten Buchse 50 ist, verschiebt sich der das erste Kolbenteil 20 gegenüber der Buchse 50, während sich die Gewindebuchse 80 nicht relativ zu der zweiten Buchse 70 bewegt. Stattdessen bewegt sich das zweite Kolbenteil 90 durch die Gewindebuchse 80.

Wenn infolge einer Abnutzung der Bremsbeläge 2 das erste Kolbenteil 20 an die Gewindebuchse 80 anstößt, bevor die Bremsbeläge 2 an der Felge anliegen, wirkt eine hinreichend grosse Kraft auf die Gewindebuchse 80, derart, dass sich die Gewindebuchse 80 dreht und sich mit dem Aussengewinde 81 auf dem Innengewinde 71 in Fig. 1 nach links schraubt, bis die Bremsbeläge 2 an der Felge angreifen.

Beim Lösen der Bremse lässt der Druck im Druckraum 5 nach, so dass sich das erste Kolbenteil 20 und das zweite Kolbenteil 90 in Fig. 1 wieder nach rechts bewegen, bis sich die Rückstellfedereinrichtung 40 wieder entspannt hat und die Gewindebuchse 80 an den Kopfabschnitt 92 des zweiten Kolbenteils 90 anstößt. Dadurch ist der gewünschte Abstand zwischen den Bremsbelägen 2 und der Felge hergestellt, der dem Abstand zwischen der Gewindebuchse 80 und dem ersten Kolbenteil 20 entspricht, wie in Fig. 1 gezeigt.

Bei jeder Bremsbetätigung erfolgt ein automatisches Nachstellen der Nehmervorrichtung 1, wobei sich der Druckraum 5 vergrößert und Hydraulikfluid aus einem nicht dargestellten Vorratsbehälter nachfließt, den der Fachmann beispielsweise von Gebervorrichtungen hydraulischer Fahrradscheibenbremsen kennt.

Wenn die Bremsbeläge 2 infolge der Abnutzung gewechselt werden müssen, kann der Kolben an dem Kolbenteil 90 wieder in entgegengesetzter Richtung gedreht werden, so dass die Gewindebuchse 80 wieder in die Anfangsstellung zurückkehrt und der Druckraum 5 wieder sein Ausgangsvolumen erreicht. Das Hydraulikfluid wird dabei wieder in den Vorratsbehälter zurückgedrückt.

Diese und die weiteren Ausführungen der Erfindung ermöglichen erstmals eine automatische Nachstellung der Ruhelage bei Fahrradfelgenbremsen. Das war bislang für Fahrradfelgenbremsen weder möglich noch bekannt.

Fig. 8 zeigt eine weitere Ausführung der Erfindung, die im Wesentlichen der in den Figuren 1 bis 7 gezeigten Ausführung entspricht. Gleiche bzw. ähnliche Merkmale und Komponenten werden mit gleichen Bezugszeichen bezeichnet. Im Folgenden werden im Wesentlichen nur die Unterschiede beschrieben. Im Übrigen wird auf die Beschreibung der Ausführung verwiesen, die in den Figuren 1 bis 7 gezeigt ist.

Bei der Ausführung von Fig. 8 weist die Buchse 70 anstelle eines Aussengewindes einen Steg 74 auf, der in eine Aussparung 14 eingreift, die in dem zweiten Zylinderabschnitt 12 vorgesehen ist, wie im unteren (bezogen auf die Buchse 70) Teil von Fig. 8 gezeigt. Auf der oberen Seite (bezogen auf Fig. 8) weist die Buchse 70 eine Aussparung 75 auf, in die ein Steg 15 des Zylinderabschnitts 12 eingreift. Durch die beiden formschlüssigen Verbindungen (Steg-Aussparung 74-14 bzw. 15-75) wird eine Verdrehung der Buchse 70 in dem Zylinderabschnitt 12 verhindert. Es ist klar, dass die Buchse 70 auch nur einen Steg oder nur eine Aussparung aufweisen kann, während der Zylinderabschnitt entsprechend ausgebildet ist. Ebenso kann die Buchse 70 mehrere Stege und/oder Aussparungen aufweisen. Die Anzahl der Stege (bei der Buchse und dem Zylinderabschnitt) kann dabei kleiner als die Anzahl der Aussparungen sein oder dieser entsprechen. Alternativ oder zusätzlich kann die Buchse 70 auch mit einer Presspassung in dem Bremszylinder 10 angeordent sein.

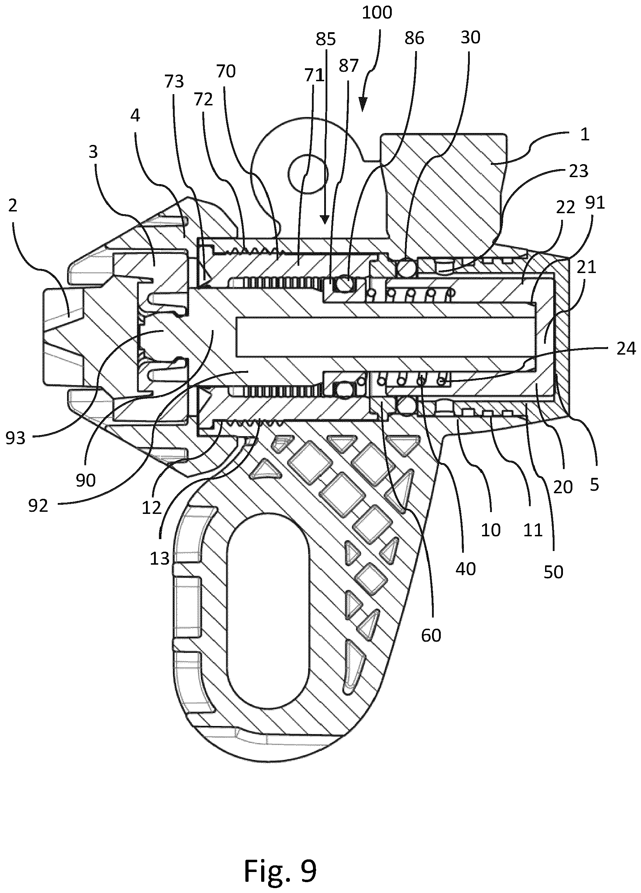

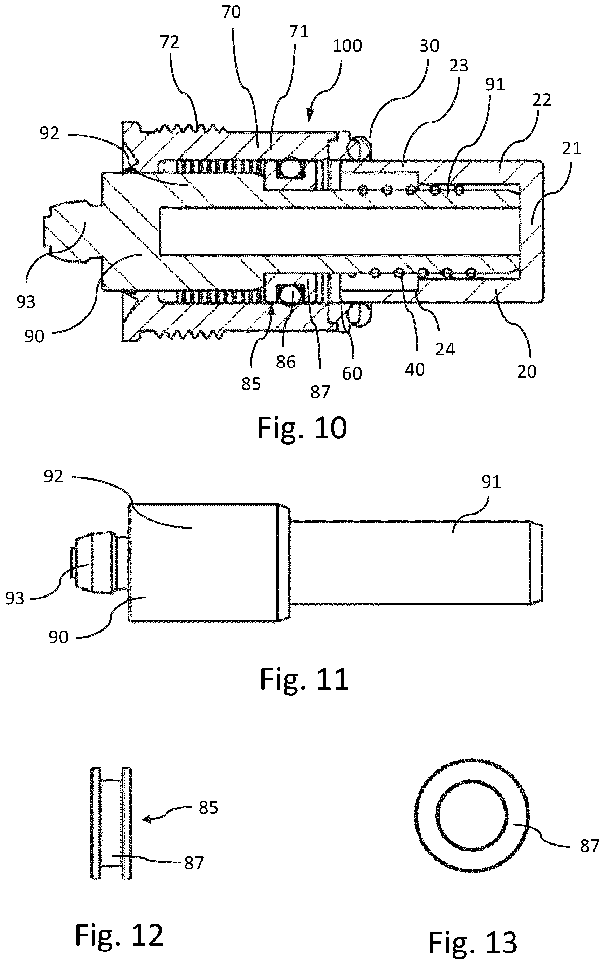

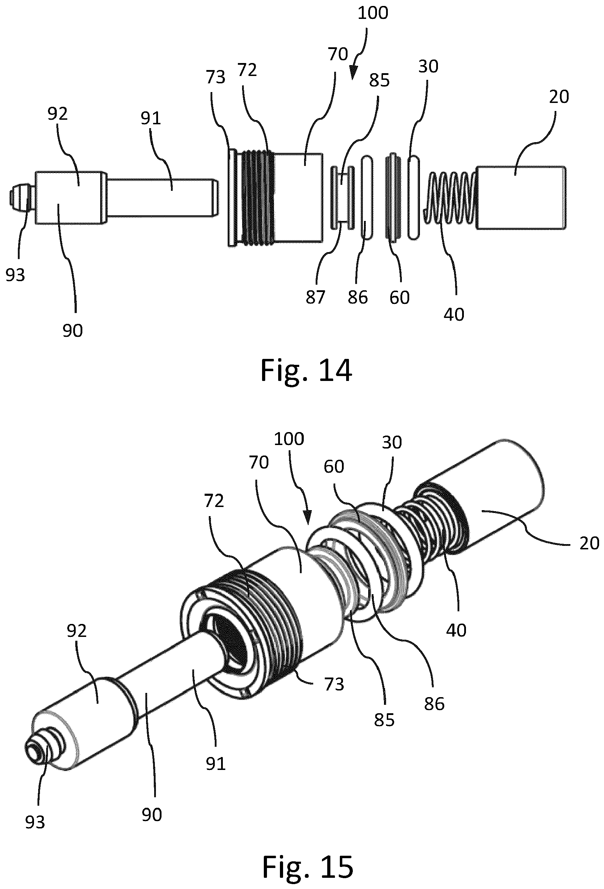

Die Figuren 9 bis 15 zeigen eine weitere Ausführung der Erfindung, die im Wesentlichen den in den Figuren 1 bis 7 bzw. 8 gezeigten Ausführungen entspricht. Gleiche bzw. ähnliche Merkmale und Komponenten werden mit gleichen Bezugszeichen bezeichnet. Im Folgenden werden im Wesentlichen nur die Unterschiede beschrieben.

Im Übrigen wird auf die Beschreibung der Ausführungen verwiesen, die in den Figuren 1 bis 8 gezeigt sind.

Bei der in den Figuren 9 bis 15 gezeigten Ausführung ist die Verstelleinrichtung 100 anders aufgebaut und weist eine Reibeinrichtung 85 auf. Die Reibeinrichtung 85 umfasst ein Reibelement 86, das in einer Aufnahmeeinrichtung 87 aufgenommen ist. Die Aufnahmeeinrichtung 87 ist auf dem Fortsatz 91 des Kolbenteils 90 in axialer Richtung des Kolbens 20, 90 verschiebbar angeordnet und umschließt diesen. Die Aufnahmeeinrichtung 87 weist einen Innendurchmesser auf, der etwas größer als der Aussendurchmesser des Fortsatzes 91 ist. Das Reibelement 86 weist einen Aussendurchmesser auf, der etwas größer als der Innendurchmesser des Bremszylinders 10 bzw. der Buchse 70 ist. Daher wird das Reibelement 86 mit einer Kraft gegen die Innenwand der Buchse 70 gepresst. Dabei wird die Haftreibung zwischen dem Reibelement 86 und der Innenwand der Buchse 70 derart durch die Wahl des Materials des Reibelements und Einstellung der Größe der Anpresskraft, die beispielsweise durch Veränderung des Aussendurchmessers des Reibelements verändert werden kann, eingestellt, dass die Haftreibung größer als die Haftreibung zwischen der Dichtungseinrichtung 40 und der Aussenwand des Kolbenteils 20 ist. Dadurch wird gewährleistet, dass sich bei der Betätigung der Bremse zunächst der Kolben in Fig. 8 nach links bewegt, ohne dass sich die Reibeinrichtung 85 relativ zu der Buchse 70 bewegt. Erst wenn der erste Kolbenteil 20 gegen die Reibeinrichtung 85 stößt, und wenn noch ein Abstand zwischen Felge und Bremsbelägen 2 besteht, wird die Reibeinrichtung 85 bei der Betätigung bezogen auf Fig. 9 nach links bewegt, bis die Bremsbeläge 2 an der Felge anliegen. Somit erfolgt wie oben beschrieben eine automatische Nachstellung der Ruhelage. Nach dem Wechseln der Bremsbeläge kann der Kolben einfach wieder in den Zylinder gedrückt werden, wobei das Hydraulikfluid wieder in den Vorratsbehälter zurückfließt.

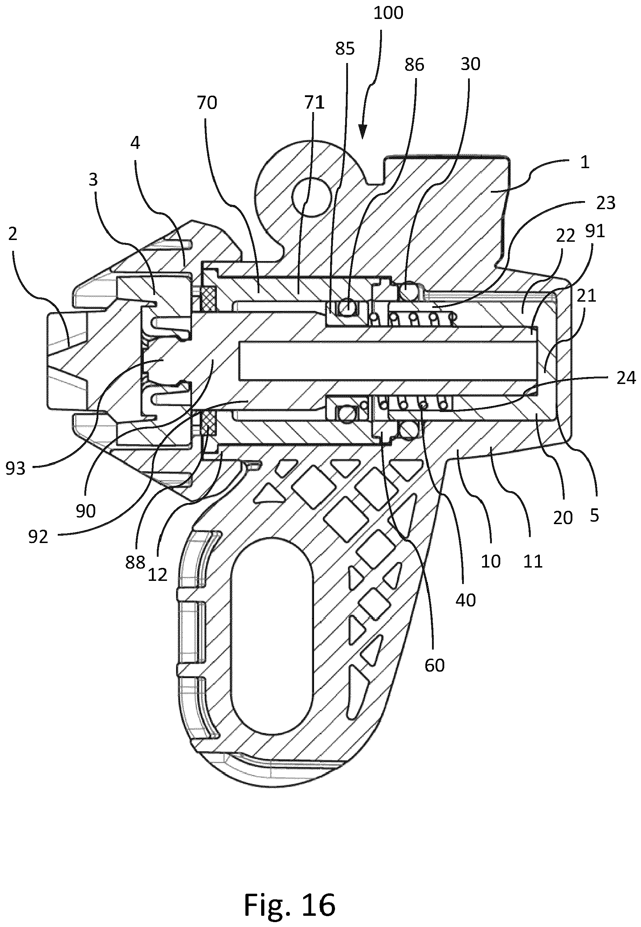

Figur 16 zeigt eine weitere Ausführung der Erfindung, die im Wesentlichen den in den Figuren 1 bis 7 bzw. 8 bzw. 9 bis 15 gezeigten Ausführungen entspricht. Gleiche bzw. ähnliche Merkmale und Komponenten werden mit gleichen Bezugszeichen bezeichnet. Im Folgenden werden im Wesentlichen nur die Unterschiede beschrieben. Im Übrigen wird auf die Beschreibung der Ausführungen verwiesen, die in den Figuren 1 bis 15 gezeigt sind.

Die Verstelleinrichtung 100 entspricht im Wesentlichen der in den Figuren 9 bis 15 gezeigten Ausführung.

Im Gegensatz zu der in den Figuren 9 bis 15 gezeigten Ausführung ist die Buchse 50 unmittelbar in den ersten Zylinderabschnitt 11 integriert. Diese Modifikation kann auch bei den anderen Ausführungen gemacht werden.

Der Bremsbelagträger 3 hat eine kleinere Durchgangsbohrung als bei den anderen Ausführungen, so dass zwischen dem Bremsbelagträger 3 und dem Bremszylinder 10 ein Labyrinth für die Schmutzabscheidung entsteht. Optional kann dabei - wie in Fig. 16 gezeigt - zwischen dem Bremsbelagträger 3 und dem Bremszylinder ein Schmutzabstreifer 88 vorgesehen sein, der beispielsweise aus Schaum oder Gummi ausgebildet sein kann. Insbesondere, wenn kein Schmutzabstreifer 88 vorgesehen sein soll, kann der Bremsbelagträger 3 oben und/oder unten eine oder mehrere Entlüftungsbohrungen bzw. Entwässerungsbohrungen aufweisen.

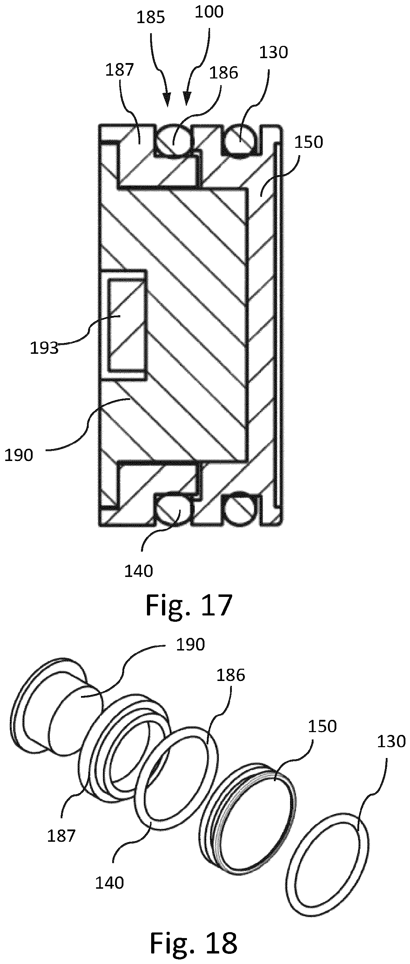

Die Figuren 17 bis 18 zeigen einen Kolben 190 für eine hydraulische Fahrradscheibenbremse gemäß einer Ausführung der Erfindung. Die den anderen Ausführungen der Erfindung entsprechenden Teile bzw. Merkmale sind mit den gleichen aber um den Wert 100 höheren Bezugszeichen bezeichnet. Auf die Beschreibung der anderen Ausführungen wird ergänzend verwiesen.

Der Kolben 190 weist eine Belagaufnahme 193 zur Aufnahme eines nicht dargestellten Bremsbelags auf. Der Kolben 190 ist bei der hydraulischen Fahrradscheibenbremse in einem nicht dargestellten Bremszylinder einer Bremszange in axialer Richtung des Kolbens verschiebbar angeordnet, deren Aufbau dem Fachmann bekannt ist. Der Kolben 190 weist eine Dichtungseinrichtung 130 auf, die in einer Buchse 150 angeordnet ist, die an dem in Fig. 17 rechten Ende des Kolbens 190 vorgesehen ist. Die Dichtungseinrichtung 130 ist in einer Nut angeordnet, die in der Buchse 150 ausgebildet ist.

Der Kolben 190 weist ferner eine Rückstellfedereinrichtung 140 auf, die in einer Aufnahmeeinrichtung 187 aufgenommen ist, die Teil einer Reibeinrichtung 185 ist. Die Aufnahmeeinrichtung 187 weist eine Stufe auf, in der die Rückstellfedereinrichtung 140 angeordnet ist. Die Länge der Stufe der Aufnahmeeinrichtung 187 ist in axialer Richtung der Kolbens 190 kürzer als die Länge der Rückstellfedereinrichtung 140, so dass die Rückstellfedereinrichtung 140 in axialer Richtung des Kolbens 190 etwas über die Stufe vorsteht. Die Rückstellfedereinrichtung 140 bildet gleichzeitig das Reibelement 186 der Reibeinrichtung 185.

Die Reibeinrichtung 185 bildet zusammen mit der Rückstellfedereinrichtung 140 die Verstelleinrichtung 100, die entsprechend den oben im Zusammenhang mit den anderen Ausführungen der Erfindung beschriebenen Verstelleinrichtungen 100 funktioniert. Auf deren Beschreibung wird verwiesen.

Bei Betätigung der Bremse wird die Buchse 150 gegen die Aufnahmeeinrichtung 187 gedrückt, so dass die Rückstellfedereinrichtung 140 zusammengepresst wird. Dabei wird der Kolben 190 in der Aufnahmeeinrichtung 187 verschoben. Falls bei Kontakt der Buchse 150 mit der Aufnahmeeinrichtung 187 der Bremsbelag wegen der Abnutzung des Bremsbelags die nicht dargestellte Bremsscheibe noch nicht berührt, wird der Kolben 190 zusammen mit der Aufnahmeeinrichtung 187 in Richtung der Bremsscheibe verschoben, so dass Haftreibung der Reibeinrichtung 185 überwunden wird und das Reibelement 186 an der Innenwandung des Bremszylinders in Richtung Bremsscheibe verschoben wird. Dadurch wird der Druckraum vergrößert und Hydraulikfluid fließt aus einem nicht dargestellten Vorratsbehälter nach.

Beim Lösen der Bremse schiebt die Rückstellfedereinrichtung 140 den Kolben 190 in Fig. 17 nach rechts, bis sich das gewünschte Lüftspiel zwischen Bremsscheibe und Bremsbelag einstellt, das durch die überstehende Rückstellfedereinrichtung 140 definiert ist. Die Reibeinrichtung 185 bleibt dabei unverändert und wird durch die Haftreibung zwischen Reibelement 186 und Bremszylinder in ihrer Stellung gehalten.

Nach dem Wechsel von Bremslägen kann der Kolben einfach wieder in den Bremszylinder geschoben werden. Die Ruhelage wird wieder automatisch durch die Rückstellfedereinrichtung 140 eingestellt.

Bei den anderen Ausführungen der Erfindung betreffend Fahrradfelgenbremsen kann die Rückstellfedereinrichtung 40 ebenso wie bei der Ausführung der Figuren 17 und 18 die Funktion der Reibeinrichtung 85 übernehmen. Dazu kann sie beispielsweise entsprechend der Ausführung der Figuren 17 bis 18 ausgebildet werden, d.h. dass die Rückstellfedereinrichtung 40 in einer Aufnahmeeinrichtung 87 aufgenommen werden kann, die in axialer Richtung des Kolbens 90 kürzer als die die Rückstellfedereinrichtung 40 ausgebildet ist und über diese vorsteht, so dass die andere Buchse die Rückstellfedereinrichtung 40 bei der Betätigung der Bremse zusammenpressen kann, bis die Aufnahmeeinrichtung 87 kontaktiert wird.

Somit kann die vorliegende Erfindung auch durch einen oder mehrere der folgenden Punkte beschrieben werden:
Punkt 1) Felgenbremsennehmervorrichtung (1) für eine hydraulische Fahrradfelgenbremse mit einem Bremszylinder (10), in dem ein Kolben (20, 90) in axialer Richtung des Zylinders verschiebbar angeordnet ist, einem Druckraum (5), in dem zur Betätigung der Bremse Hydraulikfluid unter Druck gesetzt wird und der Kolben (20, 90) unter Vergrößerung des Volumens des Druckraums (5) in axialer Richtung des Zylinders verschoben wird, und einer Verstellvorrichtung zur Verstellung der Ruhelage des Kolbens (20, 90) in axialer Richtung bezüglich des Bremszylinders (10),
   dadurch gekennzeichnet, dass die Verstellvorrichtung (100) das Volumen des Druckraums (5) bei Verstellung der Ruhelage des Kolbens (20, 90) in axialer Richtung bezüglich des Bremszylinders (10) verändert.
Punkt 2) Felgenbremsennehmervorrichtung (1) nach Punkt 1, dadurch gekennzeichnet, dass die Verstellvorrichtung (100) eine Reibeinrichtung (80; 85) aufweist, die in axialer Richtung bezüglich des Bremszylinders (10) relativ zum Bremszylinder (10) verschiebbar angeordnet ist und zwischen dem Bremszylinder (10) und der Reibeinrichtung (80; 85) eine Haftreibung erzeugt.
Punkt 3) Felgenbremsennehmervorrichtung (1) nach Punkt 2, dadurch gekennzeichnet, dass die von der Reibeinrichtung (80; 85) erzeugte Haftreibung größer als die beim Betätigen der Bremse auftretende Reibung ist, die der Kolben bei Verstellung der Ruhelage des Kolbens in axialer Richtung bezüglich des Bremszylinders (10) überwinden muss.
Punkt 4) Felgenbremsennehmervorrichtung (1) nach einem der Punkte 2 bis 3, dadurch gekennzeichnet, dass die Reibeinrichtung (80) ein an der Innenwandung des Bremszylinders (10) ausgebildetes Innengewinde (71) und eine zugeordnete Gewindebuchse (80) mit einem entsprechenden Aussengewinde (81) aufweist.
Punkt 5) Felgenbremsennehmervorrichtung (1) nach Punkt 4, dadurch gekennzeichnet, dass das Innengewinde (71) in einer Buchse (70) ausgebildet ist, die in dem Bremszylinder (10) angeordnet ist.
Punkt 6) Felgenbremsennehmervorrichtung (1) nach einem der Punkte 4 bis 5, dadurch gekennzeichnet, dass die Buchse (80) den Kolben (20, 90) umschließt, und/oder dadurch gekennzeichnet, dass die Buchse (80) in axialer Richtung bezüglich des Bremszylinders (10) gegenüber dem Kolben (20, 90) bei einer durch den Gewindeeingriff mit dem Innnengewinde (71) erzwungenen Drehbewegung verschiebbar angeordnet ist.
Punkt 7) Felgenbremsennehmervorrichtung (1) nach einem der Punkte 2 bis 6, dadurch gekennzeichnet, dass die Reibeinrichtung (85) eine Aufnahmeeinrichtung (87) aufweist, die auf dem Kolben (20, 90) in axialer Richtung bezüglich des Bremszylinders (10)verschiebbar angeordnet ist.
Punkt 8) Felgenbremsennehmervorrichtung (1) nach Punkt 7, dadurch gekennzeichnet, dass die Reibeinrichtung (85) ein Reibelement (86) aufweist, das in der Aufnahmeeinrichtung (87) angeordnet ist und gegen die Innenwandung des Bremszylinders (10) verpresst angeordnet ist, und/oder dadurch gekennzeichnet, dass die Aufnahmeeinrichtung (87) den Kolben (20, 90) mit einem Spiel umschließt.
Punkt 9) Felgenbremsennehmervorrichtung (1) nach einem der vorhergehenden Punkte, dadurch gekennzeichnet, dass der Druckraum (5) mit einer Dichtungseinrichtung (30) gegenüber der Umgebung abgedichtet ist, die als statische Dichtung ausgebildet ist.
Punkt 10) Felgenbremsennehmervorrichtung (1) nach einem der vorhergehenden Punkte, dadurch gekennzeichnet, dass der Druckraum (5) mit einer Dichtungseinrichtung (30) gegenüber der Umgebung abgedichtet ist, die in einer Nut angeordnet ist, die in der Innenwandung des Bremszylinders (10) ausgebildet ist.
Punkt 11) Felgenbremsennehmervorrichtung (1) nach einem der vorhergehenden Punkte, dadurch gekennzeichnet, dass der Bremszylinder (10) eine Buchse (70) aufweist, die eine Nut zur Aufnahme einer Dichtungseinrichtung (30) zur Abdichtung des Druckraums (5) gegenüber der Umgebung definiert.
Punkt 12) Felgenbremsennehmervorrichtung (1) nach einem der vorhergehenden Punkte, gekennzeichnet durch eine Rückstellfedereinrichtung (40), die derart angeordnet und ausgebildet ist, dass die Rückstellfedereinrichtung (40) den Kolben (20, 90) nach der Betätigung der Bremse in die Ruhelage zurückstellt.
Punkt 13) Felgenbremsennehmervorrichtung (1) nach Punkt 12, dadurch gekennzeichnet, dass die Rückstellfedereinrichtung (40) ein Federelement (86) umfasst, das als Reibelement der Reibeinrichtung (80; 85) ausgebildet ist.
Punkt 14) Hydraulische Fahrradfelgenbremse, dadurch gekennzeichnet, dass die hydraulische Fahrradfelgenbremse einen Ausgleichsbehälter für Hydraulikfluid und/oder eine Verstellvorrichtung zur Verstellung der Ruhelage des Kolbens in axialer Richtung bezüglich des Bremszylinders (10)aufweist, die den Verschleiss der Bremsbeläge automatisch ausgleicht.
Punkt 15) Hydraulische Fahrradfelgenbremse nach Punkt 14 mit einer Felgenbremsennehmervorrichtung (1) nach einem der Punkte 1 bis 13.
Punkt 16) Kolben (190) für eine hydraulische Fahrradscheibenbremse zur Anordnung in einem Bremszylinder einer Bremszange, mit einer Reibeinrichtung (185), die in axialer Richtung bezüglich des Bremszylinders relativ zum Bremszylinder verschiebbar angeordnet ist und ein Reibelement (186) zur Erzeugung einer Haftreibung zwischen dem Bremszylinder und der Reibeinrichtung (185) aufweist, und mit einer Rückstellfedereinrichtung (140) angegeben, die derart angeordnet und ausgebildet ist, dass die Rückstellfedereinrichtung (140) den Kolben (190) nach der Betätigung der Bremse in die Ruhelage zurückstellt, wobei die Rückstellfedereinrichtung (140) ein Federelement umfasst, das als Reibelement (186) der Reibeinrichtung (185) ausgebildet ist.
Punkt 17) Kolben nach Punkt 16, wobei das Federelement in einer Aufnahmeeinrichtung aufgenommen ist, wobei das Federelement in axialer Richtung des Kolbens über die Aufnahmeeinrichtung vorsteht.
Punkt 18) Kolben nach Punkt 16 oder 17, wobei die Aufnahmeeinrichtung eine Stufe aufweist, auf der das Federelement aufgenommen ist.
Punkt 19) Kolben nach einem der Punkte 16 bis 18, wobei die Aufnahmeeinrichtung als eine Buchse ausgebildet ist, die den Kolben umschließt und die auf dem Kolben in axialer Richtung des Kolbens verschiebbar angeordnet ist.
Punkt 20) Kolben nach einem der Punkte 16 bis 19, wobei die Rückstellfedereinrichtung eine Dichtungseinrichtung ist.
Punkt 21) Kolben nach einem der Punkte 16 bis 20, wobei die Rückstellfedereinrichtung ein Dichtungsring, beispielsweise ein O-Ring bzw. eine Reihe von O-Ringen ist bzw. umfasst.
Punkt 22) Kolben nach einem der Punkte 16 bis 21, wobei der Kolben für eine hydraulische Fahrradscheibenbremse auch ein Merkmal oder mehrere Merkmale der Punkte 1 bis 15 aufweist.
Punkt 23) Hydraulische Fahrradscheibenbremse, wobei die hydraulische Fahrradscheibenbremse einen Ausgleichsbehälter für Hydraulikfluid und einen oder mehrere Kolben gemäß einem der Punkte 16 bis 22 aufweist.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Kolben (190) für eine hydraulische Fahrradbremse zur Anordnung in einem Bremszylinder, mit einer Reibeinrichtung (185), die in axialer Richtung bezüglich des Bremszylinders relativ zum Bremszylinder verschiebbar angeordnet ist und ein Reibelement (186) zur Erzeugung einer Haftreibung zwischen dem Bremszylinder und der Reibeinrichtung (185) aufweist, und mit einer Rückstellfedereinrichtung (140), die derart angeordnet und ausgebildet ist, dass die Rückstellfedereinrichtung (140) den Kolben (190) nach der Betätigung der Bremse in die Ruhelage zurückstellt,
**dadurch gekennzeichnet, dass** die Rückstellfedereinrichtung (140) ein Federelement umfasst, das als Reibelement (186) der Reibeinrichtung (185) ausgebildet ist.

2. Kolben (190) nach Anspruch 1, wobei das Federelement der Rückstellfedereinrichtung (140) in einer Aufnahmeeinrichtung (187) aufgenommen ist, wobei das Federelement der Rückstellfedereinrichtung (140) in axialer Richtung des Kolbens (190) über die Aufnahmeeinrichtung (187) vorsteht.

3. Kolben (190) nach Anspruch 1 oder 2, wobei die Aufnahmeeinrichtung (187) eine Stufe aufweist, auf der das Federelement der Rückstellfedereinrichtung (140) aufgenommen ist.

4. Kolben (190) nach einem der Ansprüche 1 bis 3, wobei die Aufnahmeeinrichtung (187) als eine Buchse ausgebildet ist, die den Kolben (190) umschließt und die auf dem Kolben (190) in axialer Richtung des Kolbens (190) verschiebbar angeordnet ist.

5. Kolben (190) nach einem der Ansprüche 1 bis 4, wobei die Rückstellfedereinrichtung (140) eine Dichtungseinrichtung ist.

6. Kolben (190) nach einem der Ansprüche 1 bis 5, wobei die Rückstellfedereinrichtung (140) ein Dichtungsring ist bzw. einen Dichtungsring umfasst.

7. Kolben (190) nach einem der Ansprüche 1 bis 5, wobei die Rückstellfedereinrichtung (140) ein O-Ring ist bzw. einen O-Ring umfasst.

8. Kolben (190) nach einem der Ansprüche 1 bis 5, wobei die Rückstellfedereinrichtung (140) eine Reihe von O-Ringen ist bzw. umfasst.

9. Kolben (190) nach einem der vorhergehenden Ansprüche, wobei der Kolben (190) eine Belagaufnahme (193) zur Aufnahme eines Bremsbelags umfasst.

10. Kolben (190) nach einem der vorhergehenden Ansprüche, wobei der Kolben (190) an einem Ende eine Buchse (150) und eine in der Buchse (150) angeordnete Dichtungseinrichtung (130) aufweist.

11. Kolben (190) nach Anspruch 10, wobei die Dichtungseinrichtung (130) in einer Nut angeordnet ist, die in der Buchse (150) ausgebildet ist.

12. Kolben (190) nach einem der vorhergehenden Ansprüche, wobei die Rückstellfedereinrichtung (140) in einer Aufnahmeeinrichtung (187) aufgenommen ist, die Teil der Reibeinrichtung (185) ist.

13. Kolben (190) nach einem der vorhergehenden Ansprüche, wobei die Reibeinrichtung (185) zusammen mit der Rückstellfedereinrichtung (140) eine Verstelleinrichtung (100) zur Verstellung der Ruhelage des Kolbens (190) in axialer Richtung bezüglich des Bremszylinders bildet.

14. Kolben (190) nach Anspruch 13, wobei die Verstellvorrichtung (100) das Volumen des Druckraums bei Verstellung der Ruhelage des Kolbens (190) in axialer Richtung bezüglich des Bremszylinders verändert.

15. Hydraulische Fahrradbremse, wobei die hydraulische Fahrradbremse einen Ausgleichsbehälter für Hydraulikfluid und einen oder mehrere Kolben (190) gemäß einem der Ansprüche 1 bis 14 aufweist.
